# EUROPEAN PATENT APPLICATION

(11) **EP 4 836 515 A1**
(43) Date of publication of application: **04.11.2026**
(21) Application number: 23962945.4
(22) Date of filing: 29.12.2023
(51) Int. Cl.: H04W 36/00

(54) **INFORMATION RECORDING METHOD AND APPARATUS, INFORMATION RECEIVING METHOD AND APPARATUS, TERMINAL, NETWORK DEVICE, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Gunzelmann, Rainer
(86) International application number: PCT/CN2023/143659
(87) International publication number: WO 2025/138271

(57) **Abstract**

The present disclosure relates to the technical field of communications, and in particular to an information recording method and apparatus, an information receiving method and apparatus, a terminal, a network device, and a storage medium. The information recording method comprises: recording a related measurement result of layer (L) 1 or L2-triggered mobility (LTM). According to the present disclosure, because the measurement result recorded by a terminal is the related measurement result of the LTM, compared to a conventional measurement result sent by the terminal to a network device being used for assisting the network device in performing L3-triggered mobility, the related measurement result of the LTM can assist the network device in performing the LTM, ensuring that the network device can accurately determine, in a timely manner and on the basis of the related measurement result of the LTM reported by the terminal, whether to perform the LTM.

## Description

### FIELD

The present disclosure relates to the field of communication technologies, and particularly to a method of recording information, a method of receiving information, an apparatus of recording information, an apparatus of receiving information, a communication system, a terminal, a network device, a communication device, and a storage medium.

### BACKGROUND

In the related art, a terminal may perform some measurement operations, for example, measuring some downlink signals of a cell and sending a measurement result to a network device, such that the network device may understand the network environment of the terminal according to the measurement result, thereby assisting the network device in performing operations to ensure communication quality between the network device and the terminal.

### SUMMARY

Embodiments of the present disclosure provide a method and an apparatus of recording information, a method and an apparatus of receiving information, a terminal, a network device, and a storage medium to solve technical problems in the related art.

According to a first aspect of embodiments of the present disclosure, a method of recording information, performed by a terminal, is provided. The method includes: recording a layer (L) 1/L2 triggered mobility (LTM)-related measurement result.

According to a second aspect of embodiments of the present disclosure, a method of receiving information, performed by a network device, is provided. The method includes: receiving a layer (L) 1/L2 triggered mobility (LTM)-related measurement result sent by a terminal.

According to a third aspect of embodiments of the present disclosure, an apparatus of recording information is provided, including: a recording module configured to record a layer (L) 1/L2 triggered mobility (LTM)-related measurement result.

According to a fourth aspect of embodiments of the present disclosure, an apparatus of receiving information is provided, including: a receiving module configured to receive a layer (L) 1/L2 triggered mobility (LTM)-related measurement result sent by a terminal.

According to a fifth aspect of embodiments of the present disclosure, a method of receiving information, is provided. The method includes: recording, by a terminal, a layer (L) 1/L2 triggered mobility (LTM)-related measurement result; and receiving, by a network device, the LTM-related measurement result sent by the terminal.

According to a sixth aspect of embodiments of the present disclosure, a terminal is provided, including: one or more processors, in which the terminal is configured to perform the method of recording information as described in the first aspect.

According to a seventh aspect of embodiments of the present disclosure, a network device is provided, including: one or more processors, in which the network device is configured to perform the method of receiving information as described in the second aspect.

According to an eighth aspect of embodiments of the present disclosure, a communication system is provided, including a terminal and a network device, in which the terminal is configured to implement the method of recording information as described in the first aspect, and the network device is configured to implement the method of receiving information as described in the second aspect.

According to a ninth aspect of embodiments of the present disclosure, a storage medium is provided. The storage medium having stored thereon instructions which, when executed on a communication device, cause the communication device to perform the method of recording information as described in the first aspect, and/or the method of receiving information as described in the second aspect.

According to embodiments of the present disclosure, since the measurement result recorded by the terminal is the LTM-related measurement result, compared with traditional measurement results sent by the terminal to the network device which assist the network device in performing L3 triggered mobility, the LTM-related measurement result may assist the network device in performing LTM, which is beneficial for ensuring that the network device may timely and accurately determine whether to perform LTM according to the LTM-related measurement result reported by the terminal.

### BRIEF DESCRIPTION OF THE DRAWINGS

In order to illustrate technical solutions of embodiments of the present disclosure in a clearer manner, drawings used in embodiments will be described hereinafter briefly. Apparently, the following drawings merely relate to some embodiments of the present disclosure, and based on these drawings, a person of ordinary skill in the art may obtain other drawings without any creative effort.
FIG. 1 is a schematic diagram illustrating an architecture of a communication system according to embodiments of the present disclosure.
FIG. 2 is an interactive schematic diagram illustrating a method of recording information according to embodiments of the present disclosure.
FIG. 3 is a flow chart illustrating a method of recording information according to embodiments of the present disclosure.
FIG. 4 is a flow chart illustrating a method of receiving information according to embodiments of the present disclosure.
FIG. 5 is a schematic block diagram illustrating an apparatus of recording information according to embodiments of the present disclosure.
FIG. 6 is a schematic block diagram illustrating an apparatus of receiving information according to embodiments of the present disclosure.
FIG. 7A is a schematic block diagram illustrating a communication device according to embodiments of the present disclosure.
FIG. 7B is a schematic block diagram illustrating a chip according to embodiments of the present disclosure.

### DETAILED DESCRIPTION

Embodiments of the present disclosure provide a method and an apparatus of recording information, a method and an apparatus of receiving information, a terminal, a network device, and a storage medium.

In a first aspect, embodiments of the present disclosure provide a method of recording information, performed by a terminal, including: recording a layer (L) 1/L2 triggered mobility (LTM)-related measurement result.

In the above embodiments, since the measurement result recorded by the terminal is the LTM-related measurement result, compared with traditional measurement results sent by the terminal to the network device which assist the network device in performing L3 triggered mobility, the LTM-related measurement result may assist the network device in performing LTM, which is beneficial for ensuring that the network device may timely and accurately determine whether to perform the LTM according to the LTM-related measurement result reported by the terminal.

According to any of the embodiments of the first aspect, the method further includes: sending the LTM-related measurement result to the network device.

According to any of the embodiments of the first aspect, the LTM-related measurement result includes at least one of: an L1 measurement result; or an L3 measurement result.

According to any of the embodiments of the first aspect, the LTM-related measurement result includes at least one of: an LTM-related measurement result of a serving cell of the terminal; an LTM-related measurement result of a source cell of the terminal; an LTM-related measurement result of a target cell of the terminal; an LTM-related measurement result of a neighbouring cell of the terminal; or an LTM-related measurement result of a candidate cell in LTM configuration information.

According to any of the embodiments of the first aspect, recording the LTM-related measurement result includes: recording the LTM-related measurement result into a report variable, in which the report variable includes at least one of: a connection establishment failure report variable; a radio link failure report variable; or a successful handover report variable.

According to any of the embodiments of the first aspect, recording the LTM-related measurement result includes: recording the LTM-related measurement result in response to determining that a first condition is satisfied, in which the first condition includes at least one of: the terminal being configured with the LTM configuration information; a first cell belonging to a candidate cell in the LTM configuration information, in which the first cell includes at least one of: a serving cell of the terminal, a source cell of the terminal, a target cell of the terminal or a neighbouring cell of the terminal; or the LTM-related measurement result being triggered by a handover to an LTM cell.

According to any of the embodiments of the first aspect, the method further includes: receiving request information sent by the network device, in which the request information is configured to request the terminal to send the LTM-related measurement result to the network device.

According to any of the embodiments of the first aspect, the method further includes: sending capability indication information to the network device, in which the capability indication information indicates at least one of: whether the terminal supports recording the LTM-related measurement result; or whether the terminal supports sending the LTM-related measurement result to the network device.

In a second aspect, embodiments of the present disclosure provide a method of receiving information, performed by a network device, including: receiving a layer (L) 1/L2 triggered mobility (LTM)-related measurement result sent by a terminal.

According to any of the embodiments of the second aspect, the LTM-related measurement result includes at least one of: an L1 measurement result; or an L3 measurement result.

According to any of the embodiments of the second aspect, the LTM-related measurement result includes at least one of: an LTM-related measurement result of a serving cell of the terminal; an LTM-related measurement result of a neighbouring cell of the terminal; an LTM-related measurement result of a source cell of the terminal; an LTM-related measurement result of a target cell of the terminal; or an LTM-related measurement result of a candidate cell in LTM configuration information.

According to any of the embodiments of the second aspect, the LTM-related measurement result is recorded into a report variable, and the report variable includes at least one of: a connection establishment failure report variable; a radio link failure report variable; or a successful handover report variable.

According to any of the embodiments of the second aspect, the method further includes: sending request information to the terminal, in which the request information is configured to request the terminal to send the LTM-related measurement result to the network device.

According to any of the embodiments of the second aspect, the method further includes: receiving capability indication information sent by the terminal, in which the capability indication information indicates at least one of: whether the terminal supports recording the LTM-related measurement result; or whether the terminal supports sending the measurement result to the network device.

In a third aspect, embodiments of the present disclosure provide an apparatus of recording information, including: a recording module configured to record a layer (L) 1/L2 triggered mobility (LTM)-related measurement result.

In a fourth aspect, embodiments of the present disclosure provide an apparatus of receiving information, including: a receiving module configured to receive a layer (L) 1/L2 triggered mobility (LTM)-related measurement result sent by a terminal.

In a fifth aspect, embodiments of the present disclosure provide a method of receiving information, including: recording, by a terminal, a layer (L) 1/L2 triggered mobility (LTM)-related measurement result; and receiving, by a network device, the LTM-related measurement result sent by the terminal.

In a sixth aspect, embodiments of the present disclosure provide a terminal, including: one or more processors, in which the terminal is configured to perform the method of recording information as described in the first aspect and any one of optional embodiments of the first aspect.

In a seventh aspect, embodiments of the present disclosure provide a network device, including: one or more processors, in which the network device is configured to perform the method of receiving information as described in the second aspect and any one of optional embodiments of the second aspect.

In an eighth aspect, embodiments of the present disclosure provide a communication system, including a terminal and a network device, in which the terminal is configured to implement the method of recording information as described in the first aspect and any one of optional embodiments of the first aspect, and the network device is configured to implement the method of receiving information as described in the second aspect and any one of optional embodiments of the second aspect.

In a ninth aspect, embodiments of the present disclosure provide a storage medium storing instructions which, when executed on a communication device, cause the communication device to perform the method of recording information as described in the first aspect and any one of optional embodiments of the first aspect and/or the method of receiving information as described in the second aspect and any one of optional embodiments of the second aspect.

In a tenth aspect, embodiments of the present disclosure provide a program product, which when executed by a communication device, causes the communication device to perform the method as described in the first aspect and any one of optional embodiments of the first aspect, and the second aspect and any one of optional embodiments of the second aspect.

In an eleventh aspect, embodiments of the present disclosure provide a computer program which, when run on a computer, causes the computer to perform the method as described in the first aspect and any one of optional embodiments of the first aspect, and the second aspect and any one of optional embodiments of the second aspect.

As can be appreciated, the apparatus of recording information, the apparatus of receiving information, the terminal, the network device, the communication system, the storage medium, the program product, and the computer program are all used to execute the method in the embodiments of the present disclosure. Therefore, the beneficial effects that can be achieved may refer to the beneficial effects in the corresponding method, and thus the description thereof is omitted herein.

Embodiments of the present disclosure provide a method and an apparatus of recording information, a method and an apparatus of receiving information, a terminal, a network device, and a storage medium. In some embodiments, terms such as method of recording information, method of receiving information and method of processing information, communication method may be used interchangeably; terms such as apparatus of recording information, apparatus of receiving information and apparatus of processing information, communication apparatus may be used interchangeably; and terms such as system of processing information and communication system may be used interchangeably.

Embodiments of the present disclosure are not exhaustive, but are merely illustrative of some embodiments, and are not intended to be a specific limitation on the scope of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of the steps in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In the various embodiments of the present disclosure, unless otherwise specified and in case of logical conflicts, the terms and/or descriptions among the embodiments are consistent and may be referenced to each other, and technical features in different embodiments may be combined to form new embodiments according to their intrinsic logical relationships.

The terms used in embodiments of the present disclosure is for the purpose of describing specific embodiments only, and is not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like.

For example, in a case where an article such as "a", "an", and "the", in English is used in translation, a noun after the article may be understood as a singular expression or a plural expression.

In embodiments of the present disclosure, "a plurality of" refers to two or more.

In some embodiments, terms such as "at least one of", "one or more", "a plurality of", "multiple", may be used interchangeably.

In some embodiments of the present disclosure, expressions such as "at least one of A or B", "A and/or B", "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

In some embodiments of the present disclosure, expressions such as "A or B" may include the following technical solutions depending on the situation: in some embodiments A (A is executed regardless of B); in some embodiments B (B is executed regardless of A); in some embodiments, execution is selected from A and B (A and B are selectively executed). The same applies when there are more branches such as A, B, and C.

The prefix words such as "first" and "second" in embodiments of the present disclosure are only for distinguishing different description objects, and do not impose limitations on the position, order, priority, quantity, content, etc. of the described objects. For the description of the described objects, please refer to the description of the context in the claims or the embodiments, and should not constitute unnecessary restrictions due to the use of the prefix words.

For example, if the described object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the described object is "level", the ordinal number before "level" in "first level" and "second level" does not limit the priority between "level". For another example, the number of described objects is not limited by ordinal numbers, and may be one or more. Taking "first device" as an example, the number of "devices" may be one or more. Furthermore, objects modified by different prefixes may be the same or different, for example, if the described object is the "device", the "first device" and the "second device" may be the same device or different devices, and the types thereof may be the same or different. For another example, when the described object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to ...", "in response to determining ...", "in a case where ...", "when ...", "upon ...", "if ..." may be used interchangeably.

In some embodiments, terms such as "greater than", "greater than or equal to", "not smaller than", "more than", "more than or equal to", "not lower than", "higher", "higher than or equal to", "not less than", "above" and the like may be used interchangeably, and terms such as "smaller than", "smaller than or equal to", "not greater than", "less than", "less than or equal to", "not more than", "lower than", "lower than or equal to", "not higher than", "below" and the like may be used interchangeably.

In some embodiments, the apparatus and the device may be interpreted as physical or virtual, and the names thereof are not limited to those described in embodiments, and may also be understood as "apparatus", "equipment", "device", "circuit", "network element", "node", "function", "unit", "section", "system", "network", "chip", "chip system", "entity", "body" and the like in some cases.

In some embodiments, the "network" may be interpreted as an apparatus included in the network, for example, an access network device, a core network device and the like.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell" "carrier", "component carrier", "bandwidth part (BWP)" and the like may be used interchangeably.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be used interchangeably.

In some embodiments, an access network device, a core network device, or a network device may be replaced by a terminal. For example, embodiments of the present disclosure may also be applied to structures where communication between an access network device, a core network device, or a network device and a terminal is replaced by communication between multiple terminals (e.g., device-to-device (D2D), vehicle-to-everything (V2X), etc.). In this case, the terminal may also have all or part of the functions of the access network device. In addition, terms such as "uplink", "downlink" and the like may also be replaced by terms corresponding to inter-terminal communication (e.g., "side"). For example, terms such as uplink channel, downlink channel and the like may be replaced by sidelink channel; terms such as uplink, downlink and the like may be replaced by sidelink.

In some embodiments, a terminal may be replaced by an access network device, a core network device, or a network device. In this case, the access network device, core network device, or network device may also have all or part of the functions of the terminal.

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

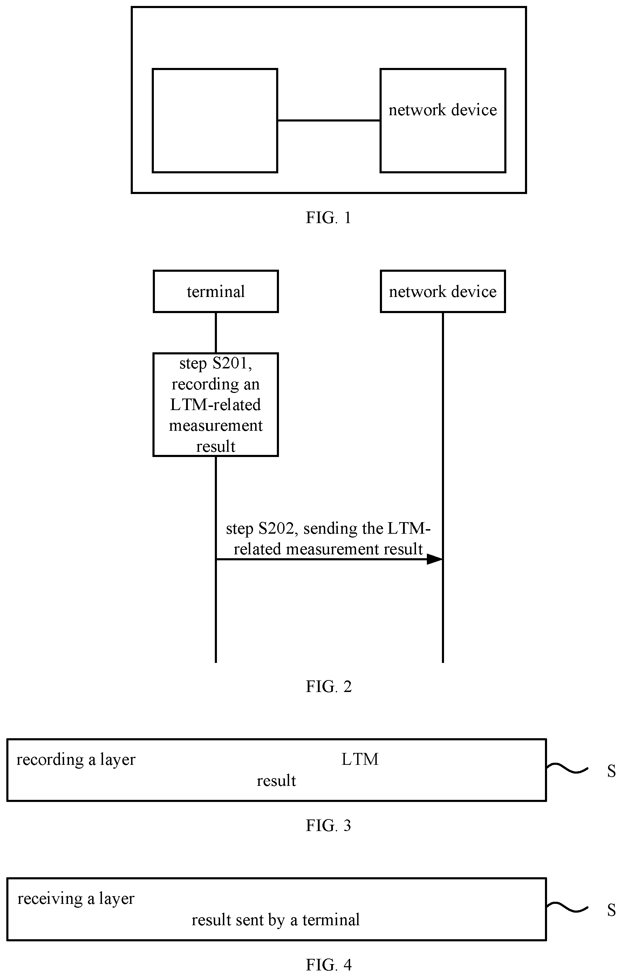

FIG. 1 is a schematic diagram illustrating an architecture of a communication system according to embodiments of the present disclosure.

As shown in FIG. 1, a communication system 100 includes a terminal 101 and a network device 102, in which the network device includes at least one of: an access network device or a core network device.

In some embodiments, the terminal 101 includes, for example, at least one of, but is not limited to: a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home.

In some embodiments, the access network device is, for example, a node or device that accesses a terminal to a wireless network, and the access network device may include at least one of, but is not limited to: an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system.

In some embodiments, the core network device may be one device including one or more network elements, or may be a plurality of devices or a group of devices including all or part the aforementioned one or more network elements respectively. The network element may be virtual or physical. The core network includes, for example, at least one of an evolved packet core (EPC), a 5G core network (5GCN), and a next generation core (NGC).

In some embodiments, the technical solution of the present disclosure may be applied to an Open RAN architecture. Moreover, an interface between or within the access network device according to embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but not limited thereto.

As can be appreciated, the communication system described in embodiments of the present disclosure is to more clearly explain the technical solution of embodiments of the present disclosure, and does not constitute a limitation on the technical solution provided by the embodiments of the present disclosure. As those skilled in the art know, with the evolution of the system architecture and the emergence of new business scenarios, the technical solutions provided by the embodiments of the present disclosure is applicable to similar technical problems.

The following embodiments of the present disclosure may be applied to the communication system 100 illustrated in FIG. 1 or a part of the entities, but is not limited thereto. The entities shown in FIG. 1 are illustrative, and the communication system may include all or part of the entities shown in FIG. 1, and may also include other entities other than those shown in FIG. 1. The number and form of the entities are arbitrary, each entity may be physical or virtual, the connection relationship between the entities is an example, the entities may not be connected or connected, and the connection may be any form, including direct connection or indirect connection, wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

In some embodiments, the terminal may perform a measurement operation and record a measurement result, and may further send the measurement result to the network device.

For example, scenarios for recording the measurement result include at least one of: minimization of drive test (MDT) or self-organizing network (SON).

In some embodiments, the measurement result recorded by the terminal only includes a layer3 (L3) measurement result. However, in some scenarios, the L3 measurement result is insufficient for assisting the network device.

For example, in an L1/L2-triggered mobility (LTM) scenario, the network device may configure LTM configuration information for the terminal. The LTM configuration information includes a candidate cell (which may be one cell or a cell group including a plurality of cells) and may further include related information for communication in the candidate cell.

Subsequently, the network device may perform an LTM cell handover for the terminal. For example, the network device may instruct the terminal to perform a cell change through an L1 (e.g., downlink control information (DCI)) or an L2 (e.g., a media access control control element (MAC CE)). For example, the terminal is instructed to change a cell in which it is located from a candidate cell#1 to a candidate cell#2.

Since the related information for communication in the candidate cell is pre-configured to the terminal by the network device through LTM configuration, after the cell in which the terminal is located is switched to the candidate cell #2, the network device does not need to configure the related information for communication in the candidate cell #2 for the terminal again, which is beneficial for the terminal to complete cell handover and communication as soon as possible.

In contrast, an L3 triggered mobility cell handover, such as traditional handover (HO), conditional handover (CHO), etc., is triggered through a radio resource control (RRC) signaling, which, compared to the LTM cell handover, takes longer and is not conducive to the terminal quickly completing cell handover and communication.

However, traditional measurement results sent by the terminal to the network device are mainly used to assist the network device in performing the L3 triggered mobility, not for assisting the network device in performing LTM. Therefore, it is necessary to improve the measurement result sent by the terminal to the network device.

FIG. 2 is an interactive schematic diagram illustrating a method of recording information according to embodiments of the present disclosure.

As shown in FIG. 2, the method of recording information may include the following steps.

In step S201, a terminal records an LTM-related measurement result.

In step S202, the terminal sends the LTM-related measurement result to a network device.

In the embodiments of the present disclosure, since the measurement result recorded by the terminal is the LTM-related measurement result, compared with traditional measurement results sent by the terminal to the network device which assist the network device in performing L3 triggered mobility, the LTM-related measurement result may assist the network device in performing LTM, which is beneficial for ensuring that the network device may timely and accurately determine whether to perform the LTM according to the LTM-related measurement result reported by the terminal.

In some embodiments, the LTM-related measurement result includes at least one of: an L1 measurement result; or an L3 measurement result.

In some embodiments, the terminal may measure a signal in a beam of the network device, for example, it may measure a synchronization signal (SS) and physical downlink broadcast channel (PBCH) block (SSB) in the beam. The signal measured is not limited to the SSB, and other signals such as channel state information reference signal (CSI-RS) may also be measured, for which the embodiments of the present disclosure are not limited.

In some embodiments, the LTM-related measurement result may include a measurement result corresponding to one or more SSBs of a candidate cell in LTM configuration information.

For example, the signal may first pass through an L1 filter, and filtered to obtain the L1 measurement result. The L1 measurement result may be input to an L3 filter and filtered to obtain an L3 filtering result.

For example, a parameter related to the L1 filter may be determined based on UE implementation specific.

For example, a parameter related to the L3 filter may be determined based on a parameter configured by a radio resource control (RRC) signaling.

For example, the LTM-related measurement result may include only the L1 measurement result. For example, the LTM-related measurement result may include the L1 measurement result and the L3 measurement result. For example, the LTM-related measurement result may include the L3 measurement result.

In some embodiments, in a case where the LTM-related measurement result only includes the L1 measurement result, the LTM-related measurement result may assist the network device in determining at least one of: whether to perform the LTM, how to perform the LTM (e.g., on which time-frequency resources).

In some embodiments, in a case where the LTM-related measurement result includes both the L1 measurement result and the L3 measurement result, the LTM-related measurement result may assist the network device in determining at least one of: whether to perform the LTM and handover based on the L3 measurement result (e.g., traditional HO, CHO, etc.), whether to perform the LTM or handover based on the L3 measurement result (e.g., traditional HO, CHO, etc.) or how to perform the LTM (e.g., on which time-frequency resources) and how to perform handover based on the L3 measurement result (e.g., on which time-frequency resources).

In some embodiments, in a case where the LTM-related measurement result includes only the L3 measurement result, the LTM-related measurement result may assist the network device in determining at least one of: whether the handover based on the L3 measurement result is reasonable, and whether the LTM still needs to be performed.

As for whether the LTM-related measurement result specifically includes the L1 measurement result, or include the L3 measurement result, or include both the L1 and L3 measurement results, it may be indicated by the network device or agreed upon by a protocol.

In some embodiments, the L1 measurement result and the L3 measurement result may be measurement results for the same cell (e.g., the L1 measurement result is for a cell #1, and the L3 measurement result is for the cell #1).

In some embodiments, the L1 measurement result and the L3 measurement result may be measurement results for different cells (e.g., the L1 measurement result is for the cell #1, and the L3 measurement result is for a cell #2).

As for whether the L1 measurement result and the L3 measurement result are for the same cell or different cells, the terminal may determine this based on an indication of the network device or protocol agreement, which is not limited in the present disclosure.

In some embodiments, since the L1 measurement result includes a physical layer measurement result, in a case where the terminal sends the LTM-related measurement result to the network device via the RRC signaling, the terminal may first perform internal interaction, for example, obtaining the L1 measurement result from a physical layer via an RRC layer, and sending the LTM-related measurement result to the network device via the RRC signaling.

In some embodiments, the LTM-related measurement result includes at least one of:
an LTM-related measurement result of a serving cell of the terminal;
an LTM-related measurement result of a source cell (e.g., a cell where the terminal is located before performing cell handover) of the terminal;
an LTM-related measurement result of a target cell (e.g., a cell to which the terminal needs to switch during cell handover) of the terminal;
an LTM-related measurement result of a neighbouring cell of the terminal; or
an LTM-related measurement result of a candidate cell in LTM configuration information.

Taking the LTM-related measurement result including the LTM-related measurement result of the candidate cell in the LTM configuration information as an example.

In some embodiments, in a case of recording the LTM-related measurement result, the terminal may mark an association relationship between a measurement result and a cell, and may further mark a type of cell. For example, the LTM-related measurement result recorded by the terminal includes a measurement result #1, which is a measurement result corresponding to the cell #1. The cell #1 may belong to the candidate cell in the LTM configuration information, and the terminal may mark the cell #1 as the candidate cell in the LTM configuration information. Furthermore, after the LTM-related measurement result is sent to the network device subsequently, the network device may also determine that the measurement result #1 is the measurement result corresponding to the cell #1, and that the cell #1 is the candidate cell in the LTM configuration information.

In some embodiments, in a case of recording the measurement result, the terminal may record the LTM-related measurement result of the candidate cell in the LTM configuration information separately from an LTM-related measurement result of another cell. For example, the terminal may record the LTM-related measurement result of the candidate cell in the LTM configuration information in a dedicated list. Furthermore, after the LTM-related measurement result is sent to the network device subsequently, the network device may determine that the measurement result in the dedicated list is the LTM-related measurement result of the candidate cell in the LTM configuration information.

In some embodiments, recording the LTM-related measurement result includes: recording the LTM-related measurement result into a report variable, in which the report variable includes at least one of: a connection establishment failure (CEF) report variable; a radio link failure (RLF) report variable; or a successful handover report (SHR) variable.

In a case where the terminal records the LTM-related measurement result, the terminal may record the LTM-related measurement result into the report variable, and may send content in the report variable to the network device, thereby sending the LTM-related measurement result to the network device.

Before the terminal sends the LTM-related measurement result to the network device, a manner of recording the LTM-related measurement result is not limited to recording the LTM-related measurement result in the report variable, and the LTM-related measurement result may also be recorded through other manners, which is not particularly defined in the present disclosure.

For example, the CEF report variable may include at least one of: VarConnEstFailReport-r16, VarConnEstFailReportList-r17 or VarConnEstFailReportList-r18.

For example, the RLF report variable may include at least one of: rlf-Report-r16, rlf-Report-r17 or rlf-Report-r18. In a case where the terminal records the LTM-related measurement result in the RLF report variable, the LTM-related measurement result may include an LTM-related measurement result measured for RLF, or may include an LTM-related measurement result measured for HO failure.

For example, the SHR variable may include at least one of: VarSuccessHO-Report-r17 or VarSuccessHO-Report-r18.

In some embodiments, recording the LTM-related measurement result includes: recording the LTM-related measurement result in response to determining that a first condition is satisfied, in which the first condition includes at least one of:
the terminal being configured with the LTM configuration information;
a first cell belonging to a candidate cell in the LTM configuration information, in which the first cell includes at least one of: a serving cell of the terminal, a source cell of the terminal, a target cell of the terminal or a neighbouring cell of the terminal; or
the LTM-related measurement result being triggered by a handover to an LTM cell.

In some embodiments, the terminal determines that the RLF occurs in the cell #1, in which the cell #1 includes at least one of: the serving cell of the terminal, the source cell of the terminal, the target cell of the terminal or the neighboring cell of the terminal, the terminal may record the LTM-related measurement result of the cell #1 into the report variable.

In some embodiments, in a case where the terminal determines that the RLF occurs in the cell #1, and the terminal is configured with the LTM configuration information, the terminal may record the LTM-related measurement result of the cell #1 into the report variable. The cell #1 may include at least one of: the serving cell of the terminal, the source cell of the terminal, the target cell of the terminal or the neighboring cell of the terminal.

In some embodiments, in a case where the terminal determines that the CEF occurs in the cell #1, in which the cell #1 includes at least one of the following: the serving cell of the terminal, the source cell of the terminal, the target cell of the terminal or the neighboring cell of the terminal, the terminal may record the LTM-related measurement result of the cell #1 into the report variable.

In some embodiments, in a case where the terminal determines that the CEF occurs in the cell #1, and the terminal is configured with the LTM configuration information, the terminal may record the LTM-related measurement result of the cell #1 into the report variable. The cell #1 may include at least one of: the serving cell of the terminal, the source cell of the terminal, the target cell of the terminal or the neighboring cell of the terminal.

In some embodiments, in a case where the terminal determines that the LTM-related measurement result is triggered by the handover to the LTM cell (e.g., too early handover to the LTM cell, too late handover to the LTM cell, LTM handover failure, etc.), the terminal may record the LTM-related measurement result into the report variable.

It should be noted that the trigger conditions for the terminal to record the LTM-related measurement result are not limited to the above situations. For example, the terminal may also record the LTM-related measurement result into the report variable in a case where a SHR trigger recording condition is satisfied.

In some embodiments, the terminal receives request information sent by the network device, in which the request information is used to request the terminal to send the LTM-related measurement result to the network device.

For example, the terminal may send the LTM-related measurement result to the network device only after receiving the request information sent by the network device. The request information may reuse traditional request information (e.g., a report request), or the request information may be newly defined request information, which may be dedicated to requesting the terminal to send the LTM-related measurement result.

It should be noted that, in some embodiments, the terminal sending the LTM-related measurement result to the network device may also be performed without being based on the request information from the network device. For example, the terminal may record time t1 when the LTM-related measurement result is determined. In a case where no request information is received from the network device within a duration T1 from the time t1, the terminal may automatically send (e.g., send on a pre-configured resource) the LTM-related measurement result to the network device. This is beneficial for avoiding a case where the LTM-related measurement result stored by the terminal is deleted due to prolonged storage time, resulting in wasted overhead from a measurement operation.

The following describes, through various embodiments, exemplary cases where the LTM-related measurement result includes the L1 measurement result.

In some embodiments, in response to the occurrence of the RLF, the terminal may record an L1 measurement result associated with a cell into the report variable, in which the cell is an LTM candidate cell, including at least one of a PCell where the RLF occurred or the neighboring cell.

In some embodiments, in response to the occurrence of the RLF, in a case where the terminal has available LTM configuration, it may record the L1 measurement result associated with the cell into the report variable, including at least one of the PCell where the RLF occurred or the neighboring cell.

In some embodiments, in response to satisfying the SHR trigger recording condition, the terminal may record the L1 measurement result associated with the cell into the report variable, in which the cell is the LTM candidate cell, including at least one of a handover source cell, the target cell or the neighboring cell.

In some embodiments, in response to the occurrence of the CEF, the terminal may record the L1 measurement result associated withthe cell into the report variable, in which the cell is the LTM candidate cell, including at least one of a PCell where the CEF occurred or the neighboring cell.

In some embodiments, in response to the occurrence of the CEF, in a case where the terminal has the available LTM configuration, it may record the L measurement result associated with the cell into the report variable, including at least one of the PCell where the CEF occurred or the neighboring cell.

In some embodiments, the terminal may send capability indication information to the network device, in which the capability indication information indicates at least one of:
whether the terminal supports recording the LTM-related measurement result; or
whether the terminal supports sending the LTM-related measurement result to the network device.

In some embodiments, the terminal informs the network device of support for recording the LTM-related measurement result and sending the LTM-related measurement result to the network device, so that the network device may subsequently perform appropriate operations, which is beneficial to avoid resource waste.

For example, in a case where the terminal supports recording the LTM-related measurement result and sending the LTM-related measurement result to the network device, the capability information sent by the terminal to the network device may indicate that the terminal supports recording the LTM-related measurement result and sending the LTM-related measurement result to the network device.

In this case, when the network device needs the LTM-related measurement result, it may choose to send the request information to the terminal to request the terminal to send the LTM-related measurement result to the network device.

For example, in a case where the terminal supports recording the LTM-related measurement result but does not support sending the LTM-related measurement result to the network device, the capability information sent by the terminal to the network device may indicate that the terminal supports recording the LTM-related measurement result but does not support sending the LTM-related measurement result to the network device.

In this case, when the network device needs the LTM-related measurement result, it may choose to send the request information to other devices that may communicate with the terminal, to request those other devices to obtain the LTM-related measurement result from the terminal, and then obtain the LTM-related measurement result recorded by the terminal from those other devices.

For example, in a case where the terminal does not support recording the LTM-related measurement result but supports sending the LTM-related measurement result to the network device, the capability information sent by the terminal to the network device may indicate that the terminal does not support recording the LTM-related measurement result but supports sending the LTM-related measurement result to the network device.

In this case, since the terminal does not record the LTM-related measurement result, the network device does not need to attempt to obtain the LTM-related measurement result recorded by the terminal.

In some embodiments, the terminal may further send availability indication information to the network device, in which the availability indication information indicates that available LTM-related measurement result is stored in the terminal.

In some embodiments, the availability indication information may reuse traditional availability indication information, and may further be newly defined availability indication information, which may be dedicated to indicating that the available LTM-related measurement result is stored in the terminal.

In some embodiments, the LTM-related measurement result may be included in a report, which is sent by the terminal to the network device.

The report including the LTM-related measurement result may be a traditional report, such as a traditional SON report (e.g., a traditional RLF report, a traditional SHR, a traditional CEF report, etc.), a traditional MDT report and the like; it may further be a newly defined report, such as a newly defined SON report (e.g., a newly defined RLF report, a newly defined SHR, a newly defined CEF report, etc.) and a newly defined MDT report.

The communication method involved in the embodiments of the present disclosure may include at least one of steps S201 to S202. For example, step S201 may be implemented as an independent embodiment, step S202 may be implemented as an independent embodiment, and steps S201+S202 may be implemented as an independent embodiment, but not limited thereto.

In some embodiments, steps S201 and S202 may be performed in a reverse order simultaneously.

In some embodiments, step S201 is optional, and in different embodiments, one or more of these steps may be omitted or replaced.

In some embodiments, step S202 is optional, and in different embodiments, one or more of these steps may be omitted or replaced.

In some embodiments, reference may be made to other optional implementations described before or after the description corresponding to FIG. 2.

In a first aspect, embodiments of the present disclosure provide a method of recording information. FIG. 3 is a flow chart illustrating a method of recording information according to embodiments of the present disclosure. The method of recording information in these embodiments may be performed by a terminal.

As shown in FIG. 3, the method of recording information may include the following steps.

In step S301, an LTM-related measurement result is recorded.

It should be noted that the embodiments shown in FIG. 3 may be implemented independently or in combination with at least one other embodiment in the present disclosure, which may be selected as needed, and is not limited in the present disclosure.

In some embodiments, the method of recording information further includes: sending the LTM-related measurement result to a network device.

In some embodiments, the LTM-related measurement result includes at least one of: an L1 measurement result; or an L3 measurement result.

In some embodiments, the LTM-related measurement result includes at least one of: an LTM-related measurement result of a serving cell of the terminal; an LTM-related measurement result of a source cell of the terminal; an LTM-related measurement result of a target cell of the terminal; an LTM-related measurement result of a neighbouring cell of the terminal; or an LTM-related measurement result of a candidate cell in LTM configuration information.

In some embodiments, recording the LTM-related measurement result includes: recording the LTM-related measurement result into a report variable, in which the report variable includes at least one of: a connection establishment failure report variable; a radio link failure report variable; or a successful handover report variable.

In some embodiments, recording the LTM-related measurement result includes: recording the LTM-related measurement result in response to determining that a first condition is satisfied, in which the first condition includes at least one of: the terminal being configured with the LTM configuration information; a first cell belonging to a candidate cell in the LTM configuration information, in which the first cell includes at least one of: a serving cell of the terminal, a source cell of the terminal, a target cell of the terminal or a neighbouring cell of the terminal; or the LTM-related measurement result being triggered by a handover to an LTM cell.

In some embodiments, the method of recording information further includes: receiving request information sent by the network device, in which the request information is configured to request the terminal to send the LTM-related measurement result to the network device.

In some embodiments, the method of recording information further includes: sending capability indication information to the network device, in which the capability indication information indicates at least one of: whether the terminal supports recording the LTM-related measurement result; or whether the terminal supports sending the LTM-related measurement result to the network device.

For the first aspect and optional implementations of optional embodiments of the first aspect, reference may be made to the optional implementations in the embodiments shown in FIG. 2 and other related parts in the embodiments related to FIG. 2, and thus the description thereof is omitted herein.

In a second aspect, embodiments of the present disclosure provide a method of receiving information. FIG. 4 is a flow chart illustrating a method of receiving information according to embodiments of the present disclosure. The method of receiving information in these embodiments may be performed by a network device.

As shown in FIG. 4, the method of receiving information may include the following steps.

In step S401, an LTM-related measurement result sent by a terminal is received.

In some embodiments, the LTM-related measurement result includes at least one of: an L1 measurement result; or an L3 measurement result.

In some embodiments, the LTM-related measurement result includes at least one of: an LTM-related measurement result of a serving cell of the terminal; an LTM-related measurement result of a neighbouring cell of the terminal; an LTM-related measurement result of a source cell of the terminal; an LTM-related measurement result of a target cell of the terminal; or an LTM-related measurement result of a candidate cell in LTM configuration information.

In some embodiments, the LTM-related measurement result is recorded into a report variable, and the report variable includes at least one of: a connection establishment failure report variable; a radio link failure report variable; or a successful handover report variable.

In some embodiments, the method of receiving information further includes: sending request information to the terminal, in which the request information is configured to request the terminal to send the LTM-related measurement result to the network device.

In some embodiments, the method of receiving information further includes: receiving capability indication information sent by the terminal, in which the capability indication information indicates at least one of: whether the terminal supports recording the LTM-related measurement result; or whether the terminal supports sending the measurement result to the network device.

For the second aspect and optional implementations of optional embodiments of the second aspect, reference may be made to the optional implementations in embodiments shown in FIG. 2 and other related parts in embodiments related to FIG. 2, and thus the description thereof is omitted herein.

In some embodiments, names of information and the like are not limited to the names described in embodiments. Terms such as "information", "message", "signal", "signaling", "report", "configuration", "indication", "instruction", "command", "channel", "parameter", "field", "field", "symbol", "symbol", "codebook", "codeword", "codepoint", "bit", "data", "program", "chip" may be used interchangeably.

In some embodiments, terms such as "downlink control information (DCI)", "downlink (DL) assignment", "DL DCI", "uplink (UL) grant", "UL DCI" may be used interchangeably.

In some embodiments, terms such as "physical downlink shared channel (PDSCH)" and "DL data" may be used interchangeably, and terms such as "physical uplink shared channel (PUSCH)" and "UL data" may be used interchangeably.

In some embodiments, terms such as "synchronization signal (SS)", "synchronization signal block (SSB)", "reference signal (RS)", "pilot", "pilot signal" may be used interchangeably.

In some embodiments, terms such as "time instant", "time point", "time", "time location" may be used interchangeably, and terms such as "time duration", "time period", "time window", "window", "time" may be used interchangeably.

In some embodiments, terms such as "acquire", "obtain", "get", "receive", "transmit", "bidirectional transmission", "send and/or receive" may be used interchangeably, and these terms may be interpreted as having multiple meanings including receiving from another entity, obtaining from a protocol, obtaining from a higher layer, obtaining from a self-processing, implementing autonomously and the like.

In some embodiments, terms such as "send", "transmit", "report", "deliver", "transmit", "bidirectional transmission", "send and/or receive" may be used interchangeably.

In some embodiments, terms such as "certain", "predefined", "pre-set", "set", "indicated", "a certain", "any", "first" may be used interchangeably. Expressions such as "certain A", "predefined A", "pre-set A", "set A", "indicated A", "a certain A", "any A", "first A" may be interpreted as A predefined in a protocol or the like, or may be interpreted as A obtained through setting, configuration or indication, or may be interpreted as certain A, a certain A, any A, or first A and the like, but not limited thereto.

Corresponding to the foregoing embodiments of the method of recording information and the method of receiving information, the present disclosure further provides embodiments of an apparatus of recording information and an apparatus of receiving information.

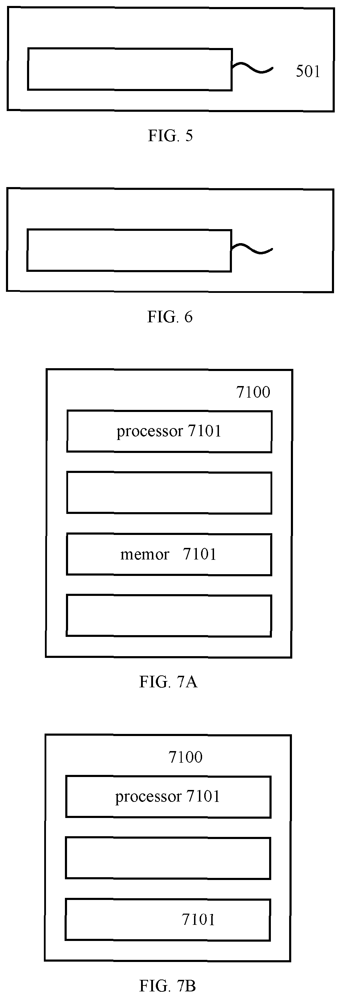

FIG. 5 is a block diagram illustrating an apparatus of recording information according to embodiments of the present disclosure. As shown in FIG. 5, the apparatus of recording information includes: a recording module 501.

In some embodiments, the recording module 501 is configured to record an LTM-related measurement result.

In some embodiments, the apparatus of recording information further includes: a sending module configured to send the LTM-related measurement result to a network device.

In some embodiments, the LTM-related measurement result includes at least one of: an L1 measurement result; or an L3 measurement result.

In some embodiments, the LTM-related measurement result includes at least one of: an LTM-related measurement result of a serving cell of the terminal; an LTM-related measurement result of a source cell of the terminal; an LTM-related measurement result of a target cell of the terminal; an LTM-related measurement result of a neighbouring cell of the terminal; or an LTM-related measurement result of a candidate cell in LTM configuration information.

In some embodiments, the recording module is configured to record the LTM-related measurement result into a report variable, in which the report variable includes at least one of: a connection establishment failure report variable; a radio link failure report variable; or a successful handover report variable.

In some embodiments, the recording module is configured to record the LTM-related measurement result in response to determining that a first condition is satisfied, in which the first condition includes at least one of: the terminal being configured with the LTM configuration information; a first cell belonging to a candidate cell in the LTM configuration information, in which the first cell includes at least one of: a serving cell of the terminal, a source cell of the terminal, a target cell of the terminal or a neighbouring cell of the terminal; or the LTM-related measurement result being triggered by a handover to an LTM cell.

In some embodiments, the apparatus of recording information further includes: a receiving module configured to receive request information sent by the network device, in which the request information is configured to request the terminal to send the LTM-related measurement result to the network device.

In some embodiments, the apparatus of recording information further includes: a sending module configured to send capability indication information to the network device, in which the capability indication information indicates at least one of: whether the terminal supports recording the LTM-related measurement result; or whether the terminal supports sending the LTM-related measurement result to the network device.

FIG. 6 is a block diagram illustrating an apparatus of receiving information according to embodiments of the present disclosure. As shown in FIG. 6, the apparatus of receiving information includes: a receiving module 601.

In some embodiments, the receiving module is configured to receive an LTM-related measurement result sent by a terminal.

In some embodiments, the LTM-related measurement result includes at least one of: an L1 measurement result; or an L3 measurement result.

In some embodiments, the LTM-related measurement result includes at least one of: an LTM-related measurement result of a serving cell of the terminal; an LTM-related measurement result of a neighbouring cell of the terminal; an LTM-related measurement result of a source cell of the terminal; an LTM-related measurement result of a target cell of the terminal; or an LTM-related measurement result of a candidate cell in LTM configuration information.

In some embodiments, the LTM-related measurement result is recorded into a report variable, and the report variable includes at least one of: a connection establishment failure report variable; a radio link failure report variable; or a successful handover report variable.

In some embodiments, the apparatus of receiving information further includes: a sending module configured to send request information to the terminal, in which the request information is configured to request the terminal to send the LTM-related measurement result to the network device.

In some embodiments, the receiving module is further configured to receive capability indication information sent by the terminal, in which the capability indication information indicates at least one of: whether the terminal supports recording the LTM-related measurement result; or whether the terminal supports sending the measurement result to the network device.

Since the apparatus embodiments substantially correspond to the method embodiments, reference is made to the corresponding description of the method embodiments. The above-described apparatus embodiments are merely for the purpose of illustration, in which the modules described as separate components may be or may not be physically separated, and the components displayed as modules may be or may not be physical modules, that is, either located at one place or distributed onto a plurality of network modules. The object of embodiments of the present disclosure may be achieved by some or all of the modules in accordance with practical requirements. It would be appreciated and executable by those skilled in the art without creative efforts.

Embodiments of the present disclosure also provide a device for implementing any of the above methods, for example, a device including units or modules for implementing the steps performed by the terminal in any of the above methods. For another example, another device is also provided, which includes units or modules for implementing the steps performed by the network device (such as an access network device, a core network function node, a core network device and the like) in any of the above methods.

It should be understood that the division of each unit or module in the above device is only a division of logical functions, which may be fully or partially integrated into a physical entity or physically separated in actual implementation. Moreover, the units or modules in the device may be implemented in a form of calling software by a processor: for example, the device includes a processor, which is connected with a memory, and instructions are stored in the memory, and the processor calls the instructions stored in the memory to implement any of the above methods or implement the functions of the units or modules of the device, in which the processor is a general-purpose processor, such as a central processing unit (CPU) or a microprocessor, and the memory is a memory in the device or a memory outside the device. Alternatively, the units or modules in the device may be implemented in a form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above device may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

FIG. 7A is a block diagram illustrating a communication device 7100 according to embodiments of the present disclosure. The communication device 7100 may be a network device (e.g., an access network device, a core network device, etc.), or may be a terminal (e.g., a user equipment, etc.), or may be a chip, a chip system, or a processor supporting the network device to implement any of the above methods, or may be a chip, a chip system, or a processor supporting the terminal to implement any of the above methods. The communication device 7100 may be used to implement the method described in the above-mentioned method embodiments, for details, reference may be made to the description in the above-mentioned method embodiments.

As shown in FIG. 7A, the communication device 7100 includes one or more processors 7101. The processor 7101 may be a general-purpose processor or a special-purpose processor, for example, a baseband processor or a central processor. The baseband processor may be used to process communication protocols and communication data, and the central processor may be used to control the communication device (such as a base station, a baseband chip, a terminal, a terminal chips, a DU or a CU, etc.), execute programs, and process program data. Optionally, the communication device 7100 is configured to perform any of the above methods. Optionally, one or more processors 7101 are configured to invoke instructions to cause the communication device 7100 to perform any of the above methods.

In some embodiments, the communication device 7100 further includes one or more transceivers 7102. In a case where the communication device 7100 includes one or more transceivers 7102, communication steps (for example, step S201 and step S202, but not limited thereto) such as sending and receiving in the above methods are performed by the transceiver 7102, and at least one of other steps (for example, step S201 and step S202, but not limited thereto) is performed by the processor 7101. In an optional embodiment, the transceiver may include a receiver and/or a transmitter, which may be separate or integrated. Optionally, terms such as transceiver, transceiver unit, transceiving machine, transceiver circuit, interface circuit, interface and the like may be used interchangeably, and terms such as transmitter, transmitting unit, transmitting machine, transmitting circuit and the like may be used interchangeably, and terms such as receiver, receiving unit, receiving machine, receiving circuit and the like may be used interchangeably.

In some embodiments, the communication device 7100 further includes one or more memories 7103 for storing data. Optionally, all or part of the memories 7103 may also be located outside the communication device 7100. In an optional embodiment, the communication device 7100 may include one or more interface circuits 7104. Optionally, the interface circuit 7104 is connected to the memory 7102. The interface circuit 7104 may be used to receive data from the memory 7102 or other devices, and may be used to send data to the memory 7102 or other devices. For example, the interface circuit 7104 may read the data stored in the memory 7102 and send the instruction to the processor 7101.

The communication device 7100 described in the above embodiments may be a network device or a terminal device, but the scope of the communication device 7100 described in the present disclosure is not limited thereto. The structure of the communication device 7100 may not be limited by FIG. 7A. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

FIG. 7B is a block diagram illustrating a chip 7200 according to embodiments of the present disclosure. For the case where the communication device 7100 is a chip or a chip system, reference may be made to the block diagram of the chip 7200 shown in FIG. 7B, but the communication device 7100 is not limited to thereto.

The chip 7200 includes one or more processors 7201, and the chip 7200 is configured to perform any of the above methods.

In some embodiments, the chip 7200 further includes one or more interface circuits 7202. Optionally, terms such as interface circuit, interface, transceiver pin and the like may be used interchangeably. In some embodiments, the chip 7200 further includes one or more memories 7203 for storing data. Optionally, all or part of the memories 7203 may be outside the chip 7200. Optionally, the interface circuit 7202 is connected to the memory 7203. The interface circuit 7202 may be configured to receive data from the memory 7203 or other devices, and the interface circuit 7202 may be configured to send data to the memory 7203 or other devices. For example, the interface circuit 7202 may read data stored in the memory 7203, and send the data to the processor 7201.

In some embodiments, the interface circuit 7202 is configured to perform at least one of communication steps such as sending and/or receiving in the above method (for example, step S201 and step S202, but not limited thereto). The interface circuit 7202 performing communication steps such as sending and/or receiving in the above method refers to: the interface circuit 7202 performs data interaction between the processor 7201, the chip 7200, the memory 7203, or the transceiver device. In some embodiments, the processor 7201 is configured to perform at least one of other steps (for example, step S201 and step S202, but not limited thereto).

The modules and devices described in the various embodiments of virtual devices, physical devices, chips, and the like may be arbitrarily combined or separated as needed. Optionally, some or all steps may also be performed collaboratively by multiple modules and/or devices, which is not limited in embodiments of the present disclosure.

The present disclosure further provides a storage medium having stored thereon instructions, which, when executed on the communication device 7100, cause the communication device 7100 to perform any of the above methods. Optionally, the storage medium is an electronic storage medium. Optionally, the storage medium is a computer-readable storage medium, but not limited to thereto, and it may be also a storage medium readable by other devices. Optionally, the storage medium may be a non-transitory storage medium, but not limited to thereto, and it may also be a transitory storage medium.

The present disclosure further provides a program product which, when executed by the communication device 7100, causes the communication device 7100 to perform any of the above methods. Optionally, the program product is a computer program product.

The present disclosure further provides a computer program that, when run on a computer, causes the computer to perform any of the above methods.

## Claims

1. A method of recording information, performed by a terminal, comprising:
recording a layer (L) 1/L2 triggered mobility (LTM)-related measurement result.

2. The method according to claim 1, further comprising:
sending the LTM-related measurement result to a network device.

3. The method according to claim 1 or 2, wherein the LTM-related measurement result comprises at least one of:
an L1 measurement result; or
an L3 measurement result.

4. The method according to any one of claims 1 to 3, wherein the LTM-related measurement result comprises at least one of:
an LTM-related measurement result of a serving cell of the terminal;
an LTM-related measurement result of a source cell of the terminal;
an LTM-related measurement result of a target cell of the terminal;
an LTM-related measurement result of a neighbouring cell of the terminal; or
an LTM-related measurement result of a candidate cell in LTM configuration information.

5. The method according to any one of claims 1 to 4, wherein recording the LTM-related measurement result comprises:
recording the LTM-related measurement result into a report variable, wherein the report variable comprises at least one of:
a connection establishment failure report variable;
a radio link failure report variable; or
a successful handover report variable.

6. The method according to any one of claims 1 to 5, wherein recording the LTM-related measurement result comprises:
recording the LTM-related measurement result in response to determining that a first condition is satisfied, wherein the first condition comprises at least one of:
the terminal being configured with the LTM configuration information;
a first cell belonging to a candidate cell in the LTM configuration information, wherein the first cell comprises at least one of: a serving cell of the terminal, a source cell of the terminal, a target cell of the terminal or a neighbouring cell of the terminal; or
the LTM-related measurement result being triggered by a handover to an LTM cell.

7. The method according to any one of claims 1 to 6, further comprising:
receiving request information sent by a network device, wherein the request information is configured to request the terminal to send the LTM-related measurement result to the network device.

8. The method according to any one of claims 1 to 7, further comprising:
sending capability indication information to a network device, wherein the capability indication information indicates at least one of:
whether the terminal supports recording the LTM-related measurement result; or
whether the terminal supports sending the LTM-related measurement result to the network device.

9. A method of receiving information, performed by a network device, comprising:
receiving a layer (L) 1/L2 triggered mobility (LTM)-related measurement result sent by a terminal.

10. The method according to claim 9, wherein the LTM-related measurement result comprises at least one of:
an L1 measurement result; or
an L3 measurement result.

11. The method according to any one of claim 9 or 10, wherein the LTM-related measurement result comprises at least one of:
an LTM-related measurement result of a serving cell of the terminal;
an LTM-related measurement result of a neighbouring cell of the terminal;
an LTM-related measurement result of a source cell of the terminal;
an LTM-related measurement result of a target cell of the terminal; or
an LTM-related measurement result of a candidate cell in LTM configuration information.

12. The method according to any one of claims 9 to 11, wherein the LTM-related measurement result is recorded into a report variable, and the report variable comprises at least one of:
a connection establishment failure report variable;
a radio link failure report variable; or
a successful handover report variable.

13. The method according to any one of claims 9 to 12, further comprising:
sending request information to the terminal, wherein the request information is configured to request the terminal to send the LTM-related measurement result to the network device.

14. The method according to any one of claims 9 to 13, further comprising:
receiving capability indication information sent by the terminal, wherein the capability indication information indicates at least one of:
whether the terminal supports recording the LTM-related measurement result; or
whether the terminal supports sending the measurement result to the network device.

15. An apparatus of recording information, comprising:
a recording module, configured to record a layer (L) 1/L2 triggered mobility (LTM)-related measurement result.

16. An apparatus of receiving information, comprising:
a receiving module, configured to receive a layer (L) 1/L2 triggered mobility (LTM)-related measurement result sent by a terminal.

17. A method of receiving information, comprising:
recording, by a terminal, a layer (L) 1/L2 triggered mobility (LTM)-related measurement result; and
receiving, by a network device, the LTM-related measurement result sent by the terminal.

18. A terminal, comprising:
one or more processors,
wherein the terminal is configured to perform the method of recording information according to any one of claims 1 to 8.

19. A network device, comprising:
one or more processors,
wherein the network device is configured to perform the method of receiving information according to any one of claims 9 to 14.

20. A communication system, comprising a terminal and a network device, wherein the terminal is configured to implement the method of recording information according to any one of claims 1 to 8, and the network device is configured to implement the method of receiving information according to any one of claims 9 to 14.

21. A storage medium having stored thereon instructions which, when executed on a communication device, cause the communication device to perform the method of recording information according to any one of claims 1 to 8 and/or the method of receiving information according to any one of claims 9 to 14.
